# EUROPEAN PATENT APPLICATION

(11) **EP 4 333 154 A1**
(43) Date of publication of application: **06.03.2024**
(21) Application number: 22193705.5
(22) Date of filing: 02.09.2022
(51) Int. Cl.: H01M 10/42, H01M 10/48, H01M 50/105, H01M 50/119, H01M 50/121, H01M 50/124, H01M 50/131, H01M 50/193, H01M 50/197, H01M 50/198

(54) **BATTERY PACK**

(71) Applicant: Murata Manufacturing Co., Ltd., Nagaokakyo-shi, Kyoto 617-8555 (JP)
(72) Inventor: HOSHIKUMA, Takahide, 81541 München (DE); BAN, Juli, 81541 München (DE); ONO, Takamasa, Kyoto, 617-8555 (JP)
(74) Representative: Zimmermann, Tankred Klaus

(57) **Abstract**

This disclosure concerns a battery pack 2 comprising: a first cover 4 and a second cover 6, and an energy storage element 8 being contained in a sealed state between the first and the second covers, and wherein at least one of the first cover 4 and the second cover 6 comprises or is formed of a liquid crystal polymer, LCP.

## Description

### Technical Filed

Embodiments of the present disclosure relate to a battery and a battery pack.

### Back ground of the invention

The present disclosure is concerned with a battery pack of a lithium ion battery (LiB). There are mainly three types LiB packages, e.g., "Pouch", "Prismatic" and "Cylindrical", in the market. The pouch type offers a simple, flexible and lightweight solution to battery design, and the pouch type battery pack makes the most efficient use of space, the highest among battery packs. Therefore, the present disclosure is focuses on a pouch type battery pack.

For the pouch type LiB battery pack, aluminum (Al) laminate film (precisely, the combination of Polyethylene terephthalate: PET, Nylon, Aluminum and Cast polypropylene: CPP) is used, because it has high barrier property against moisture / steam. However, the package of the battery pack with the Al laminate film has some issues caused by moisture. That is, under the moisture, the adhesive layer between the Nylon and Al layers deteriorates due to hydrolysis, causing the Nylon layer to peel off, and, cause of this, the Al layer is exposed. Once partially exposed to the atmosphere, severe pitting corrosion occurs on the thin aluminum film. High volumes of moisture to easily penetrate pouch type LiBs through these corroded pits, showing the detrimental effects of electrolyte contamination on pouch type LiBs' long-term cycle life and reliability. That is, the reaction between the electrolyte and moisture is even more likely to affect the interior of the battery. When moisture penetrates inside the battery, Hydrogen Fluoride is generated in reaction with the electrolyte, resulting in gas blistering (cause of lamination), foil corrosion (cause of foil breakage), and degradation (resistance rise and capacity degradation) in reaction between water and active materials. It also reduces seal strength, which can cause the seal to break. Therefore, it is necessary to prevent moisture from entering the inside of the battery.

According to EP 3 614 449 A1, a battery packaging material comprising a base material layer (e.g., resin layer), a barrier layer (e.g., Al layer), an adhesive layer, and a heat-sealable resin layer (e.g., polypropylene film) to improve sealing strength of the battery package in a high-temperature environment.

Further, to improve the reliability of the pouch type LiB, various type of detectors, sensors and devices are used for detecting conditions of the pouch type LiB. For example, US 2020/076016 A1 discloses a battery pouch including an outer layer, and an inner layer disposed on the outer layer, wherein the inner layer including at least one sensor, e.g., moisture detector, humidity detector and temperature sensor.

The pouch type LiBs are used in many fields and for many applications, e.g., mobile device, vehicle, etc., and, further improvement of long-term cycle file and reliability is expected. Thus, it is an object of the present invention to provide an improved battery pack having a long-term cycle life and a high reliability.

### Summary of the invention

An embodiment according to the invention provides a battery pack, e.g., pouch type LiB, comprising: a first cover and a second cover, e.g., upper cover and bottom cover of the battery package, and an energy storage element, e.g., battery or battery cells, being contained in a sealed state between the first and the second covers, wherein at least one of the first cover and the second cover comprises or is formed of a liquid crystal polymer, LCP. That is, the LCP has lower moisture permeability compare to the CPP (necessary layer of the Al laminate film), and, therefore, it is possible to improve for preventing the moisture penetration by replacing the Al laminate film to the LCP. As a result, it is possible to improve cycle life and reliability of the LiB battery.

In a preferred embodiment, at least one of or both of the first cover and the second cover comprise a plurality of layers, and wherein the plurality of layers comprises an inner layer facing the energy storage element and being formed of the LCP. That is, the energy storage element, e.g., the battery cells, is sandwiched by the layers formed of the LCP, and, therefore, the permeability of moisture at the sealing part is reduced. Therefore, the water proof property at the sealing part is improved.

In a preferred embodiment, the plurality of layers comprises a sensor layer, wherein the sensor layer comprises at least one sensor device, e.g., a moisture detector, a humidity detector, a thermistor, a distortion sensor and a strain sensor, for detecting a certain condition of the energy storage element, e.g., temperature condition of the energy storage element or distortion condition of the energy storage element. In case at least one sensor device is provided on the sensor layer, e.g., a layer formed of the LCP, it is not necessary to have an insulation layer which is required for the Al laminate film, and, therefore, it is possible to simplify the production line and to improve the production efficiency.

### Brief Description of the Figures

Embodiments according to the invention will subsequently be described taking reference to the enclosed figures in which:
- Fig. 1: shows a plane view of a battery pack according to embodiments of the present invention,
- Fig. 2: shows a schematic cross-sectional view along line A-A of the battery pack showed in Fig. 1 according to an embodiment of the present invention,
- Fig. 3: shows a graph indicating a result of a moisture invasion comparing with the battery pack according to the present invention and the known battery pack using the Al laminate film,
- Fig. 4: shows a schematic cross-sectional view along line A-A of the battery pack showed in Fig. 1 according to another embodiment of the present invention,
- Fig. 5: shows a schematic cross-sectional view along line A-A of the battery pack showed in Fig. 1 according to a further embodiment of the present invention,
- Fig. 6: shows a schematic cross-sectional view along line A-A of the battery pack showed in Fig. 1 according to a modified embodiment of the present invention, and
- Fig. 7: shows a schematic diagram of a battery management system according to an embodiment of the present invention.

### Detailed Description of the Embodiments

Equal or equivalent elements or elements with equal or equivalent functionality are denoted in the following description by equal or equivalent reference numerals.

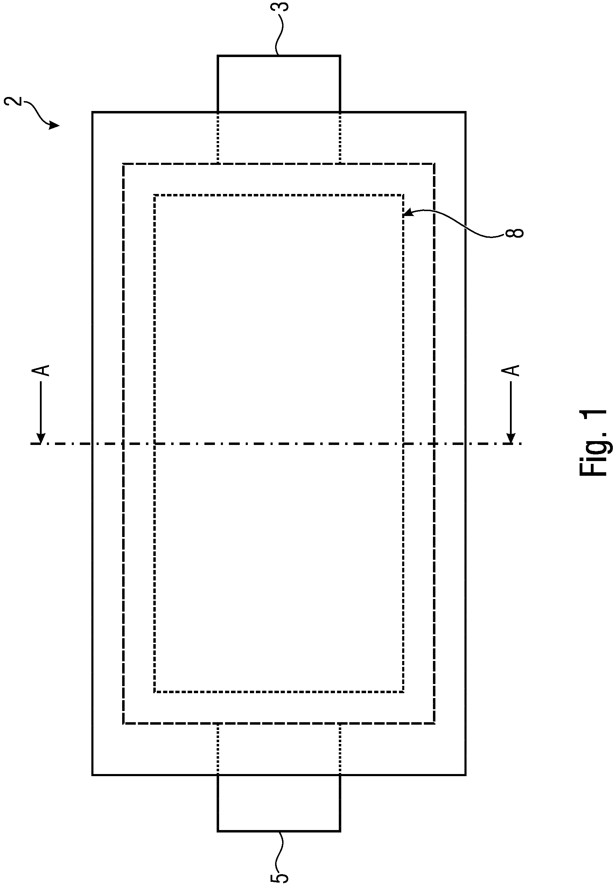

Fig. 1 shows a plane view of a battery pack 2 according to embodiments of the present invention. The battery pack 2 comprises positive-electrode tab 3, negative-electrode tab 5, and an energy storage element (battery or battery cells) 8. The energy storage element 8 may be constituted by alternately stacking a plurality of positive electrode plate and a plurality of negative electrode plate battery cells with a separator interposed therebetween or any other configurational type of the battery cells.

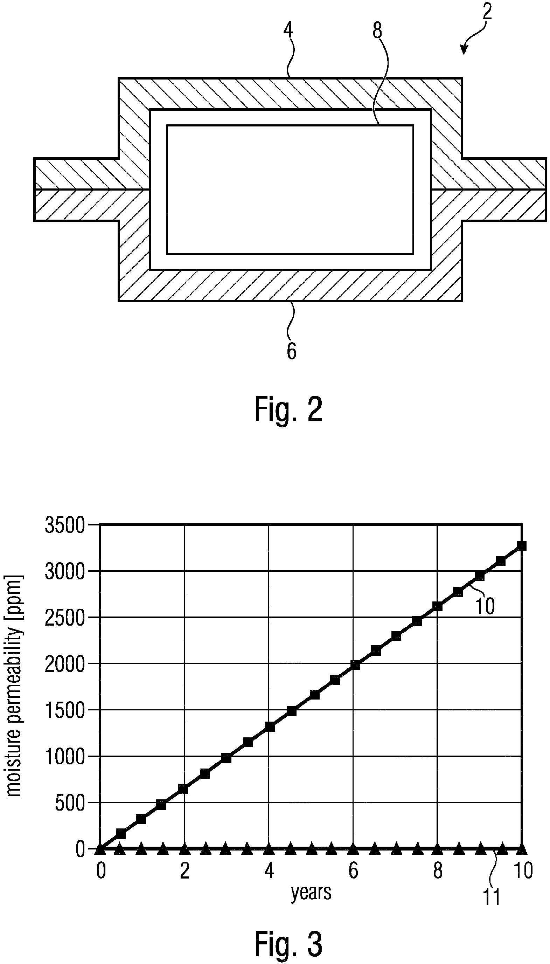

Fig. 2 shows a schematic cross-sectional view along line A-A of the battery pack 2 showed in Fig. 1 according to an embodiment of the present invention. The battery pack 2 according to the first embodiment comprises a first cover 4, e.g., an upper cover of a package of the battery, a second cover 6, e.g., a bottom cover of the package of the battery, and the energy storage element 8. The energy storage element 8 is contained in a sealed state between the first cover 4 and the second cover 6. As indicated in Fig. 2, the first cover 4 and the second cover 6 are formed as separate portions, and each edge of the first cover 4 faced to an edge of the second cover 6 and each edge of the second cover 6 faced to the edge of the first cover 4 are sealed each other to form the battery pack 2, e.g., sealed by using an adhesion material to form the battery pack 2.

In this embodiment, at least one of the first cover 4 and the second cover 6 comprises or is formed of a liquid crystal polymer (LCP). That is, the LCP has unique characteristics, e.g., heat resistant above 250 degrees, better rigidity than ordinally plastic (e.g., polypropylene), better elastic than ordinally plastic, flow molding, chemical resistance, dimension stability, flame retardant, better steam barrier than ordinally plastic. Naturally, both of the first and second covers 4, 6 may comprise or be formed of the LCP. In case the first cover 4 comprises or is formed of the LCP, the second cover 6 may comprise or be formed of a material different from the LCP, e.g., Al laminate film or other materials, and vice versa.

Usually, the Al laminate film is formed by the combination of a Nylon layer as an outer layer, an Al layer as an intermediate layer, and a Cast polypropylene (CPP) layer as an inner layer (sealing layer). That is, without having the CPP layer, the energy storage element is sandwiched by the Al layer and Al contacts to electrolyte, i.e., Al to Al-alloying is made by electrolyte, and this is cause of decrease barrier performance and voltage fluctuation (deterioration). Hence, the CPP layer is necessary when using the Al laminate film for the battery pack. However, the CPP has a higher moisture permeability than the LCP, and, therefore, by using the LCP as a cover of the battery pack, i.e., by replacing the Al laminate film to the LCP (LCP film), it is possible to have a higher moisture barrier property at the sealing part than the CPP based structure.

Fig. 3 shows a graph indicating a result of a moisture permeability at the sealing part of the battery pack comparing with the battery pack 2 according to the present invention and the known battery pack using the Al laminate film. A test of moisture permeability, i.e., accelerated testing, has been employed in below indicated condition. In the following test, the first and second covers 4, 6 of the battery pack 2 are formed of the LCP.

### Test of moisture permeability at the sealing part of the battery pack

In a condition, 25 degree and 100% RH (relative humidity).

### moisture permeability

CPP : 35g - 25um / m2 / day-atm
LCP : 0.01g - 25um / m2 / day-atm
Saturated water vapor: 3.167kPa

### Sealing

Al laminate 120*100mm 47um
CPP film 120*100mm 47um

In Fig 3, it is shown a result of the accelerated testing of the Al laminate film with reference sign 10 and a result of the accelerated testing of the LCP with reference sign 11. As indicated in Fig. 3, the LCP performed good result compared with Al package because Al laminate film must have CPP layer as already explained above. Due to the CPP's moisture permeability performance at the sealing part, the LCP showed good result. As an option, in the above indicated case, i.e., the first and second covers 4, 6 are formed of the LCP, the sealed edge width may be reduced to compare with the same size battery pack using the Al laminated film, e.g., the width could be around 1/350 of the battery pack with the Al laminate film, for keeping the same moisture invasion performance. This depends on moisture permeability of each material. By reducing the sealing width, the accommodation space for the battery pack is reduced, and, therefore, it is possible to improve freedom of application design.

It is not depicted in Fig. 2, at least one of the first cover 4 and the second cover 6 comprises at least one sensor device for detecting a certain condition of the energy storage element 8, e.g., on the first (second) cover 4 (6), a thermistor is provided for detecting temperature of the energy storage element 8. A plurality of sensor devices may be provided on the first cover 4 and/or the second cover 6. For example, a plurality of thermistor for detecting the temperature condition of the energy storage element 8 is provided on the first (second) cover 4 (6), or a plurality of strain sensors for detection the distortion condition of the energy storage element 8 is provided on the first (second) cover 4 (6), the plurality of thermistor and the plurality of strain sensors are provided on the first (second) cover 4 (6). Further, on both of the first cover 4 and the second cover 6, the plurality of thermistor is provided, or the plurality of strain sensors is provided, or the plurality of thermistor and the plurality of strain sensors are provided. The number of the sensor device is adjusted based on the condition of the energy storage element, e.g., the size, the environment to be used, type of the application to be installed, etc. When the sensor device(s) is provided on the cover formed of the LCP, an insulation layer is not required, and, therefore, it is possible to improve efficiency of the production line.

Further, it is also not depicted in Fig. 2, the battery pack of the present invention comprises a radio frequency identification device, i.e., RFID device, configured to obtain information of the certain condition of the energy storage element 8 detected by the sensor(s). The RFID device is provided on (in) the first (second) cover 4 (6).

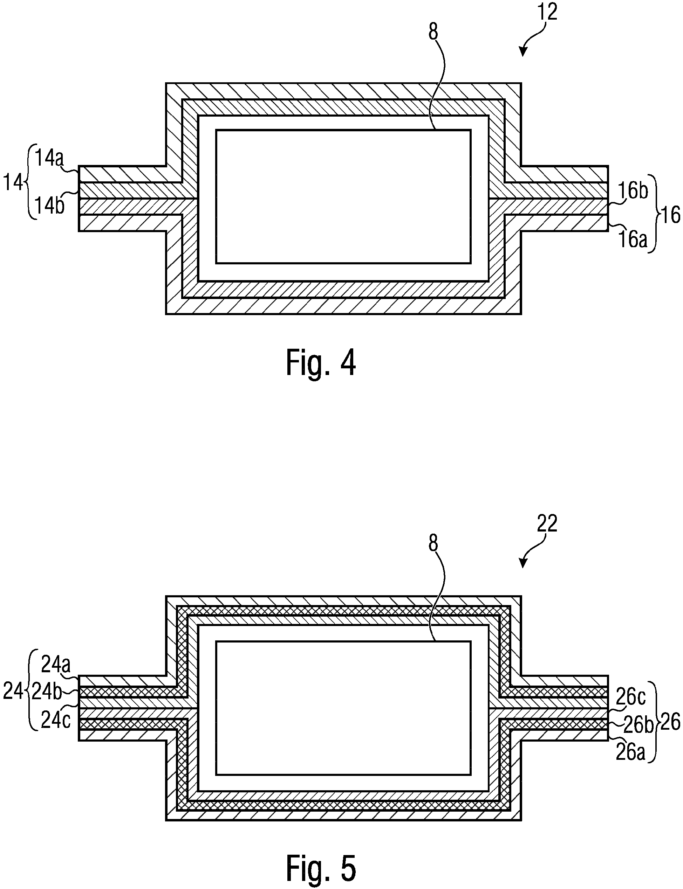

Fig. 4 shows a schematic cross-sectional view along line A-A of the battery pack shown in Fig. 1 according to another embodiment of the present invention. As indicated in Fig. 4, the first cover 14 and the second cover 16 of the battery pack 12 comprise a plurality of layers, i.e., two layers. The first cover 14 comprises an outer layer 14a and an inner layer 14b, and they are adhered (adhesive layer is not indicated) to form the first cover 14. The second cover 16 comprises an outer layer 16a and an inner layer 16b, and they are adhered (adhesive layer is not indicated) to from the second cover 16. The inner layers 14b and 16b are facing the energy storage element 8 and formed of the LCP, i.e., the energy storage element 8 is sandwiched by the inner layers 14b and 16b formed of the LCP.

In Fig. 4, the inner layers 14b, 16b are thinner than the first and second covers 4, 6 as depicted in Fig. 2. However, the thickness of the inner layer 14b and the first cover 4, and, the thickness of the inner layer 16b and the second cover 6 may be the same. Also, the thickness of the inner layer 14b and the outer layer 14a may be the same, however, their thickness may be different based on the material formed thereof. That is, the thickness of the layers is adjusted dependent of the layer material, e.g., metal printing by using aluminium alloy foil or stainless-steel foil, resin layer by using nylon or PET (polyethylene terephthalate).

The energy storage element 8 is sandwiched by the inner layers 14b and 16b formed of the LCP as shown in Fig. 4. That is, the LCP is used for packing the energy storage element 8 instead of using the CPP, and, therefore, it is possible to have a higher moisture barrier at the sealing part than the known battery pack with the Al laminate film.

In Fig. 4, each of the first and second covers 14, 16 comprise two layers, however, it is not necessary that both covers comprise two layers. That is, for example, the first cover 14 may comprise the outer layer 14a and the inner layer 14b, and the second cover 16 may comprise the inner layer 16b, i.e., without having the outer layer 16a, and vice versa.

In addition, it is not depicted in Fig. 4, at least one of the outer layers 14a, 16a comprises at least one sensor device for detecting a certain condition of the energy storage element 8, i.e., the outer layer is a sensor layer whereon at least one sensor device is provided. Further, as already explained above, a plurality of sensor devices may be provided on the outer layer 14a and/or the outer layer 16a. Further, it is also not depicted in Fig. 4, the battery pack of the present invention comprises a radio frequency identification device, i.e., RFID device, configured to obtain information of the certain condition of the energy storage element detected by the sensor. The RFID device is provided on the outer layer 14a (16a), in the outer layer 14a (16a), between the inner layer 14b (16a) and the outer layer 14a (16b) or in the inner layer 14b (16b).

Fig. 5 shows a schematic cross-sectional view along line A-A of the battery pack shown in Fig. 1 according to a further embodiment of the present invention. As indicated in Fig. 5, the first cover 24 and the second cover 26 of the battery pack 22 comprise a plurality of layers, i.e., three layers. The first cover 24 comprises an outer layer 24a, an intermediate layer 24b and an inner layer 24c, and they are adhered each other (adhesive layer is not indicated) to from the first cover 24. The second cover 16 comprises an outer layer 26a, an intermediate layer 26b and an inner layer 26c, and they are adhered each other (adhesive layer is not indicated) to form the second cover 26. The inner layers 24c and 26c are facing the energy storage element 8 and formed of the LCP, i.e., the energy storage element 8 is sandwiched by the inner layers 24c and 26c formed of the LCP. The thickness of each layer may be the same or different, and the material of the outer layer and the intermediate layer is different from the LCP, e.g., metal printing by using the aluminium alloy foil or the stainless-steel foil or nylon or PET.

It is not depicted in Fig. 5, at least one of the outer layers 24a, 26a comprises at least one sensor device for detecting a certain condition of energy storage element, i.e., the outer layer is a sensor layer whereon at least one sensor device is provided. Further, as already explained above, a plurality of sensor devices may be provided on the outer layer 24a and/or the outer layer 26a. The sensor(s) may be provided on the intermediate layer 24b (26b), and in this case, the outer layer 24a (26a) is formed of a resin or the LCP.

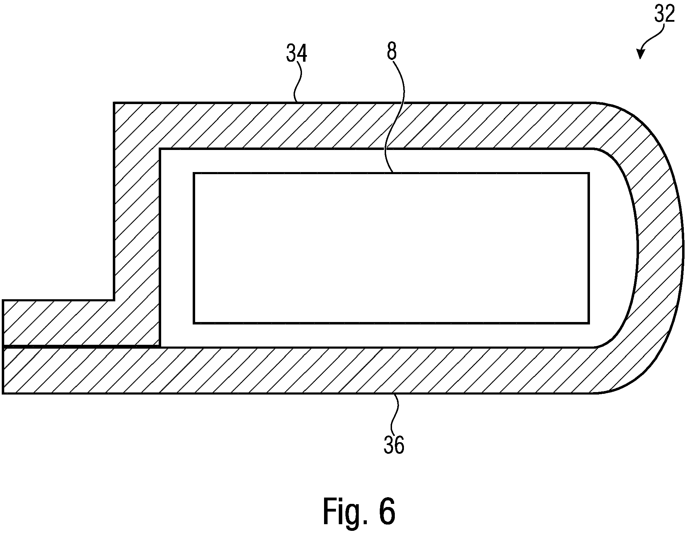

Fig. 6 shows a schematic cross-sectional view along line A-A of the battery pack shown in Fig. 1 according to a modified embodiment of the present invention. As indicated in Fig. 6, the first cover 34 and the second cover 36 are formed as a united portion, an upper side of the folded united portion is the first cover 34 and a bottom side of the folded united portion is the second cover 36, and the energy storage element 8 is packed by folding the united portion and by sealing an edge of the first cover 34 and an edge of the second cover 36 other than folded part of the united portion. As indicated in Fig. 6, the first cover 34 and the second cover 36 is formed of the united portion, and, therefore, they are formed of the same material.

In Fig. 6, the united portion comprises one layer, however, the united portion may comprise a plurality of layers, e.g., an inner layer formed of the LCP and an outer layer formed of a resin or a metal. When the outer layer is a sensor layer whereon at least one sensor device is provided, the outer layer is formed of a resin. When the united portion comprises, an inner layer formed of the LCP, an intermediate layer formed of resin, and an outer layer formed of LCP, the intermediate layer is a sensor layer whereon at least one sensor device is provided. A plurality of the sensor device may be provided on the sensor layer as explained above.

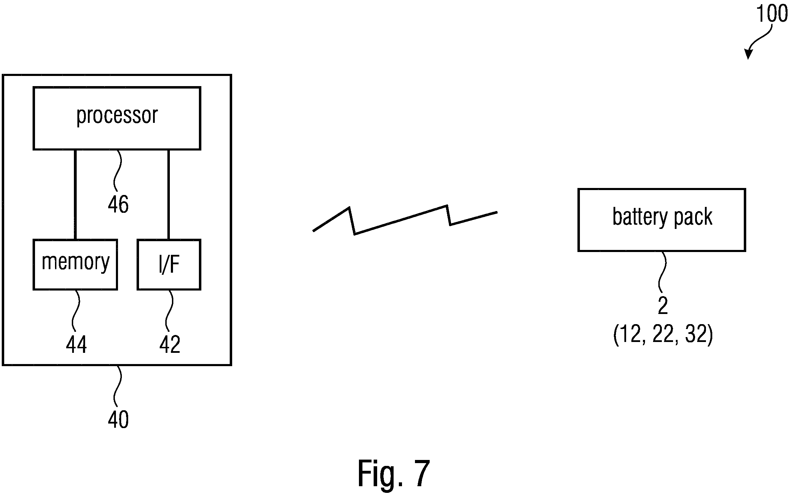

Fig. 7, shows a schematic diagram of a battery management system according to an embodiment of the present invention. The battery management system 100 comprises a battery pack 2 (12, 22, 32) including the RFID device, and a battery management device 40. The battery management device 40 includes a communication interface 42 configured to transfer data between the battery pack 2 (12, 22, 32) and the battery management device 40. The communication may be in the form electronic, electromagnetic, optical, or other signals capable of being handled by a communications interface. The communication may use a wire or a cable, fiber optics, a phone line, a cellular phone link, an RF link and other communications channels. A memory 44 configured to store the data obtained from the battery pack 2 (12, 22, 32), e.g., a random access memory (RAM). A processor 46, like a special purpose or a general purpose digital signal processor, configured to determine the condition of energy storage element 8 based on the stored data at the memory 44, and to generate a status data of the energy storage element 8. The generated status of the energy storage element is to be transferred to the battery pack 2 (12, 22, 32) via the communication interface 42.

The status of the energy storage element is determined based on the stored data, i.e., the certain condition of energy storage element, e.g., temperature condition of the energy storage element and/or distortion condition. In case the temperature condition or distortion condition is determined as normal, e.g., detected condition is under a predetermined threshold, the status data is generated to indicate the condition of the energy storage element is normal. When the temperature condition or distortion condition is determined as abnormal, the status data is generated to indicate the condition of the energy storage element is abnormal. Then, the generated status data is transferred to the battery pack and the transferred status dated is written into the RFID device. Therefore, the status of the energy storage element is easily checked by reading the status data of the energy storage element, e.g., by using any portable/mobile/handy machine/device/apparatus configured to read the status data of the energy storage element stored in the RFID device.

It is not depicted in Fig. 7, however, it is possible to use a battery module comprising a plurality of the battery pack which are stacked on the substrate, instead of a single battery pack, and the battery module comprises a RFID device. In this case, further sensors, e.g., a gas sensor, current sensor, and any other known sensors in the art, could be provided, and, the RFID device obtains information of the conditions detected by the known sensors. Hence, the status data of the energy storage element is stored in the RFID device.

While this disclosure has been described with reference to illustrative embodiments, this description is not intended to be construed in a limiting sense. Various modifications and combinations of the illustrative embodiments, as well as other embodiments of this disclosure, will be apparent to persons skilled in the art upon reference to the description. It is therefore intended that the appended claims encompass any such modifications or embodiments.

## Claims

1. A battery pack (2) comprising:
a first cover (4) and a second cover (6), and
an energy storage element (8) being contained in a sealed state between the first and the second covers, and
wherein at least one of the first cover (4) and the second cover (6) comprises or is formed of a liquid crystal polymer, LCP.

2. The battery pack (2) according to claim 1, wherein one of the first cover (4) and the second cover (6) comprises or is formed of the LCP, and the other one of the first cover (4) and the second cover (6) comprises or is formed of a material different from the LCP.

3. The battery pack (2) according to claim 1, wherein the first cover (4) and the second cover (6) comprises or is formed of the LCP.

4. The battery pack (12) according to claim 1 or 2, wherein at least one of or both of the first cover (14) and the second cover (16) comprise a plurality of layers, and
wherein the plurality of layers comprises an inner layer (14b, 16b) facing the energy storage element (8) and being formed of the LCP.

5. The battery pack (10) according to claim 4, wherein the plurality of layers comprises an outer layer (14a, 16a) comprising a material different from the LCP or being formed of the LCP.

6. The battery pack (22) according to claim 5, wherein the plurality of layers comprises at least one intermediate layer (24b, 26b) between the inner layer (24c, 26c) and the outer layer (24a, 26a) and comprising a material different from the LCP.

7. The battery pack (12, 22) according to claim 5 or 6, wherein the material different from the LCP is a metal or a resin.

8. The battery pack (12, 22) according to any one of claims 4 to 7, wherein the plurality of layers comprises a sensor layer,
wherein the sensor layer comprises at least one sensor device for detecting a certain condition of the energy storage element (8).

9. The battery pack (20) according to claim 8, wherein
the sensor layer is sandwiched between the outer layer and the inner layer,
or
the sensor layer is the outer layer.

10. The battery pack (2, 12, 22) according to any one of claims 1 to 7, wherein
at least one of the first cover (4, 14, 16) and the second cover (6, 16, 26) comprises at least one sensor device for detecting a certain condition of the energy storage element (8).

11. The battery pack (12, 22) according to any one of claims 8 to 10, wherein the sensor device comprises;
at least one sensor for detecting temperature condition of the energy storage element (8), or
at least one sensor for detecting distortion condition of the energy storage element (8).

12. The battery pack (2, 12, 22) according to any one of claims 8 to 11, wherein the battery pack (2, 12, 22) further comprises a radio frequency identification configured to obtain information of the certain condition of the energy storage element (8) detected by the sensor.

13. The battery pack (32) according to any one of claims 1 to 12, wherein
the first cover (34) and the second cover (36) are formed as a united portion,
wherein an upper side of the folded united portion is the first cover (34) and a bottom side of the folded united portion is the second cover (36), and
the energy storage element (8) is packed by folding the united portion and by sealing an edge of the first cover (34) and an edge of the second cover (36) other than folded part of the united portion.

14. The battery pack (2, 12, 22) according to any one of claims 1 to 12, wherein
the first cover (4, 14, 24) and the second cover (6, 16, 26) are formed as separate portions, and
each edge of the first cover (4, 14, 24) faced to an edge of the second cover (6, 16, 26) and each edge of the second cover (6, 16, 26) faced to the edge of the first cover (4, 14, 24) are sealed each other to form the battery pack (2, 12, 22).

15. A battery management system (100) comprising:
the battery pack (2, 12, 22, 32) according to any one of claims 12 to 14,
a battery management device (40),
wherein the battery management device (40) comprises:
a communication interface (42) configured to transfer data between the battery pack (2, 12, 22, 32) and the battery management device (40),
a memory (44) configured to store the data obtained from the battery pack (2, 12, 22, 32), and
a processor (46) configured to determine the condition of the energy storage element (8) based on the stored data at the memory (44), and to generate a status data of the energy storage element (8),
wherein the status date is to be transferred to the battery pack (2, 12, 22, 32) via the communication interface (42).
